(19) Europäisches Patentamt
European Patent Office
Office européen des brevets

(11) **EP 2 301 475 B1**

(12) **EUROPEAN PATENT SPECIFICATION**

(45) Date of publication and mention
of the grant of the patent:
**28.10.2015 Bulletin 2015/44**

(51) Int Cl.:
***A61C 8/00*** *(2006.01)*

(21) Application number: **09176938.0**

(22) Date of filing: **24.11.2009**

(54) **Dental implant**

Zahnimplantat

Implant dentaire

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **23.09.2009 IL 20111509**

(43) Date of publication of application:
**30.03.2011 Bulletin 2011/13**

(73) Proprietor: **Natan Nisimov
Brooklyn NY 11230 (US)**

(72) Inventor: **Elyav, Elkana
96428 Jerusalem (IL)**

(74) Representative: **Becker Kurig Straus
Patentanwälte
Bavariastrasse 7
80336 München (DE)**

(56) References cited:
**WO-A1-96/19947        WO-A1-96/38098
GB-A- 2 199 626        US-A1- 2005 084 820**

## Description

### FIELD OF THE INVENTION

This invention relates to an endosseous implant for prosthesis embedded in the bone tissue of a living body, and in particular, to an endosseous dental implant.

### BACKGROUND OF THE INVENTION

Endosseous dental implants such as disclosed in GB 2199626 are widely used in dental surgical procedures for restoration of one or more teeth in a patient's mouth using a prosthetic tooth that is secured to a dental abutment united with the dental implant anchored in the jawbone.

Generally, the procedure for restoring a tooth includes several stages. In the beginning, an implant cavity of dimensions adapted to those of the implant is created by drilling a hole of increasing diameter. Then, the dental implant is inserted into the hole, typically by screwing, although other techniques are known for introducing the implant in the jawbone. After the implant is initially installed in the bone, a temporary healing cap is secured over the exposed proximal end of the implant. The patient's gums are then sutured over the implant to allow the implant site to heal and to allow desired cicatrization of the bone and osseointegration with the implant to occur. This healing phase for conventional implants can take from four to ten months.

Thereafter, the surgeon reaccesses the implant by making an incision through the patient's gum tissues. The healing cap is then removed, exposing the proximal end of the implant, and a dental abutment designed to be used as support for the tooth prosthesis is united with the implant. Sometimes, prior to the final abutment, a temporary dental abutment is attached to the implant for a certain time period for control the healing and growth of the patient's gum tissue around the implant site. In a modified procedure, an abutment component can be either integrally formed with the implant or attached to the implant during the previous stage, i.e. together with the introducing of the implant in the jawbone. It should be noted that the terms "proximal" and "distal" are used herein with reference to the dental surgeon of the dental implant.

The final stage in the restorative procedure involves fabricating and placement of a cosmetic tooth prosthesis to the abutment.

The dental implant typically includes a threaded body portion and a collar portion. The body portion is configured to extend into and osteointegrate with the jawbone. The top surface of the collar portion typically lies flush with the crest of the jawbone. The dental abutment typically lies on the top surface and extends through the soft tissue of the gingiva, which lies above the jawbone.

One of the problems associated with mounting implants within a hole drilled in the jawbone is associated with poor immediate immobilization of the implants. In attempting to remedy the disadvantage, self-screw threaded (self-tapping) implants has been designed to be screwed into bone. Owing to their self-screw threading character, such implants make it possible to obtain a better intimate contact with the bone and consequently to increase the primary stability of such implants.

A typical self-tapping implant has a distal end for tapping threads in the bone, a proximal end for connecting to a prosthesis, and a threaded section usually arranged near the distal end, for engaging the threads tapped in the bone. The body of the implant near the tapping distal end usually includes several grooves or flutes that extend upwardly on the sidewall of the implant along the longitudinal axis of the implant. Each flute includes a cutting edge that scrapes off bone as the implant is rotated into the hole. The cutting edges form threads along the bone for engaging the threaded section of the implant.

Despite that the self-tapping implants generally create a more intimate contact with the surrounding bone than non-tapping implants, conventional self-tapping implants also possess numerous disadvantages. For example, irregularities or defects may be formed on the bone around the entrance of the hole at the implantation site. Such irregularities occurring as a result of the surgical procedure, further may inhibit bone integration with the implant. As another disadvantage, bone fragments and shavings (bone debris) resulting from the cutting operations tend to accumulate at the cutting edge while the implant is being tapped into the bone. This bone debris decreases the effectiveness of the cutting edge and further increases the insertion torque required to insert the implant. Moreover, the accumulated bone debris may cause compression of the bone removed which results in necrosis of the bone cells.

In attempting to remedy these disadvantages, U.S. Pat. No. 5,897,319 to Wagner et al. describes a self-tapping dental implant for implantation into bone. The implant includes multiple flutes disposed around the tapping end. Each flute has a helical configuration. During tapping, bone chips are directed upwardly and away from the tapping end.

In order to enhance the growth of living bone tissue, the metal implants can be coated with biologically-compatible materials. For example, U.S. Pat. Appl. Pub. No. 2008/020349A1 describes a bone implant comprising a solid structure provided with an osteogenic layer comprising calcium phosphate in the form of particles (dihydrate and/or alphahemidrate) with a weight average particle size comprised between 10 micrometers and 250 micrometers. This coating provides a larger bone volume for ensuring a good fixation of the artificial tooth or teeth or dental prosthesis.

In order to maximize the effects of bone growth, the implant can be provided with grooves, holes, recesses, and other features into which bone growth may proceed. For example, U.S. Pat. No. 5,759,034 to Daftary describes a dental implant that includes a plurality of spaced apart transverse annular grooves and a longitudinal groove on the implant's wall. The longitudinal groove extends upwardly from the distal end to the middle of the implant. The transverse annular grooves and the longitudinal groove provide a greater surface area into which bone growth is formed to prevent the implant fixture from vertical and rotational movements within the jawbone.

U.S. Pat. No. 5,676,545 to Jones describes a dental implant that includes at least one helical channel (flute) formed within the threaded portion of the implant. The helical channel is designed to carry bone-fragment crumbs and other bone shavings away from the distal end and distribute them throughout the threaded portion of the implant. The threaded portion of the implant also includes diametrical holes through the implant at various levels along the axis of the implant and connecting to the helical channel. The purpose of the holes is to provide receptacles for packing crumbled bone tissue prior to installation of the implant and avenues for bone tissue growth after installation.

U.S. Pat. No. 5,366,374 to Vlassis describes a dental implant that has an elongated, substantially cylindrical body, a distal hollow internal chamber and an open distal end. The distal end has a series of dentate ridges that form a rotary cutting surface for trephining the bone. Proximally there is provided a dental handpiece adapter. At least one spiral osteogroove is disposed on the external surface of the body, extending from the distal portion generally toward the proximal portion and communicating with a recessed osteoreservoir. At least one osteovent is situated in the osteogroove, and has a leading bevelled margin to promote the ingress of bone fragments therethrough into the internal chamber.

U.S. Pat. No. 5,871,356 to Guedj describes a dental implant that has a tubular distal section with a cylindrical wall that turns around an axis, and is provided with an outer thread and defines an inner holding volume for bone material. The cylindrical wall has at least one distal indentation that forms a front cutting edge at the ring-shaped base.

## SUMMARY OF THE INVENTION

Despite the known techniques in the area of endosseous implants for prosthesis embedded in the bone tissue, there is a need in the art for, and it would be useful to have a novel dental implant, which has improved osteointegration properties and encourages bone tissue growth in and around the implant thereby achieving greater attachment security over longer periods of time.

It would be advantageous to have a dental implant that can provide a greater surface area into which bone growth is formed to prevent the implant fixture from vertical and rotational movements and to further support the implant fixture within the jawbone.

It would also be advantageous to have a dental implant that will be mechanically strong in order to resist the stresses to which it is subjected during installation and use.

It would still be advantageous to have a dental implant that will less traumatize the jawbone, thereby decreasing the healing phase after insertion of the implant.

It would further be advantageous to have a dental implant that will be biologically compatible with the bone tissue in order that it may facilitate bone growth in and around the implant.

The present disclosure satisfies the aforementioned need by providing a novel endosseous dental implant for anchoring in a jawbone to support an abutment for mounting a dental prosthesis.

According to one embodiment, the dental implant comprises a collar portion, a mid portion integrally connected to the collar portion, and a base portion integrally connected to a mid portion.

The collar portion is located at an open proximal distal end having an axial opening, and is configured to secure the abutment to the dental implant. It should be noted that in the description and claims that follow, the terms "proximal" and "distal" are used with reference to the dental surgeon of the dental implant. The axial opening extends into a blind hole proceeding from the proximal end into the interior of the implant. The blind hole includes an internally-extending chamfered zone located near the proximal end, that is followed by a wrench-engaging zone adapted for engaging with a tool that screws the implant into the jawbone, that is in turn followed by an abutment post receiving chamber zone, that is followed by an internally-threaded zone having a threaded surface configured to receive a bolt used to secure the abutment to the dental implant.

According to one embodiment of the present invention, the collar portion has a substantially cylindrical unthreaded shape.

According to a further embodiment of the present invention, a part of the wrench-engaging zone, the entire post receiving chamber zone, and the internally-threaded zone are resided within the mid portion.

The mid portion is integrally connected to the collar portion. The mid portion includes external helical treads turning around an external wall of the mid portion.

According to a further embodiment, the mid portion includes at least one flute having a self-tapping cutting edge. For example, the flute can extend at least half of the length of the mid portion.

According to still a further embodiment, the mid portion is tapered with contraction towards the base portion. For example, the contraction of the mid portion starts from the end of the collar portion. The contraction of the mid portion can, for example, be axially symmetric with a tapering angle from about 2° to about 10°. Alternatively, the contraction of the mid portion can be asymmetric with respect to a longitudinal axis of the dental implant.

The base hollow portion is integrally connected to a mid portion and located at an open distal end of the implant. The base hollow portion comprises a wall that defines an internal storage volume for an osseous tissue of the jawbone. The base hollow portion further comprises a plurality of openings arranged in the wall. The openings pass through the wall and enter the internal storage volume. The base hollow portion is unthreaded and tapered with contraction towards the distal end.

According to one embodiment of the present invention, the openings have a circular shape. The circular openings can, for example, be arranged in one or more rows. The rows can, for example, be distributed and equally spaced along the length of the hollow base portion. The circular openings in each row can, for example, be equally spaced.

According to one embodiment of the present invention, the area of the openings in the wall of the base portion should not exceed 60% of the total area of the wall. Preferably, the area of the openings in the wall of the base portion is in the range of about 50% to 60% of the total area of the wall.

According to one embodiment of the present invention, the openings are slot openings. The slot openings can, for example, extend along at least a part of the length of the base portion between the mid portion and the distal end of the base portion.

The dental implant of the present invention can be effectively screwed through the jaw bone to smoothly transmit torque from the proximal end of the dental implant to the distal end.

There has thus been outlined, rather broadly, the more important features of the invention in order that the detailed description thereof that follows hereinafter may be better understood. Additional details and advantages of the invention will be set forth in the detailed description, and in part will be appreciated from the description, or may be learned by practice of the invention.

## BRIEF DESCRIPTION OF THE DRAWINGS

In order to understand the invention and to see how it may be carried out in practice, embodiments will now be described, by way of non-limiting example only, with reference to the accompanying drawings, in which:

Fig. 1A is a schematic side elevation view of an endosseous dental implant, according to one embodiment of the present invention;
Fig. 1B is a schematic longitudinal cross-sectional view of the dental implant of Fig. 1A;
Fig. 1C is a schematic proximal end cross-sectional view of a portion of the dental implant of Fig. 1A taken along the line B - B';
Fig. 1D is a schematic transverse cross-sectional view of the dental implant of Fig. 1A taken along the line A - A';
Fig. 2A is a schematic side elevation view of an endosseous dental implant, according to another embodiment of the present invention; and
Fig. 2B is a schematic longitudinal cross-sectional view of the dental implant of Fig. 2A.

## DETAILED DESCRIPTION OF EMBODIMENTS

The principles of the method for the medical device according to the present invention may be better understood with reference to the drawings and the accompanying description, wherein like reference numerals have been used throughout to designate identical elements. It being understood that these drawings which are not necessarily to scale and proportions, are given for illustrative purposes only and are not intended to limit the scope of the invention. Examples of constructions, materials, dimensions, and manufacturing processes are provided for selected elements. Those versed in the art should appreciate that many of the examples provided have suitable alternatives which may be utilized.

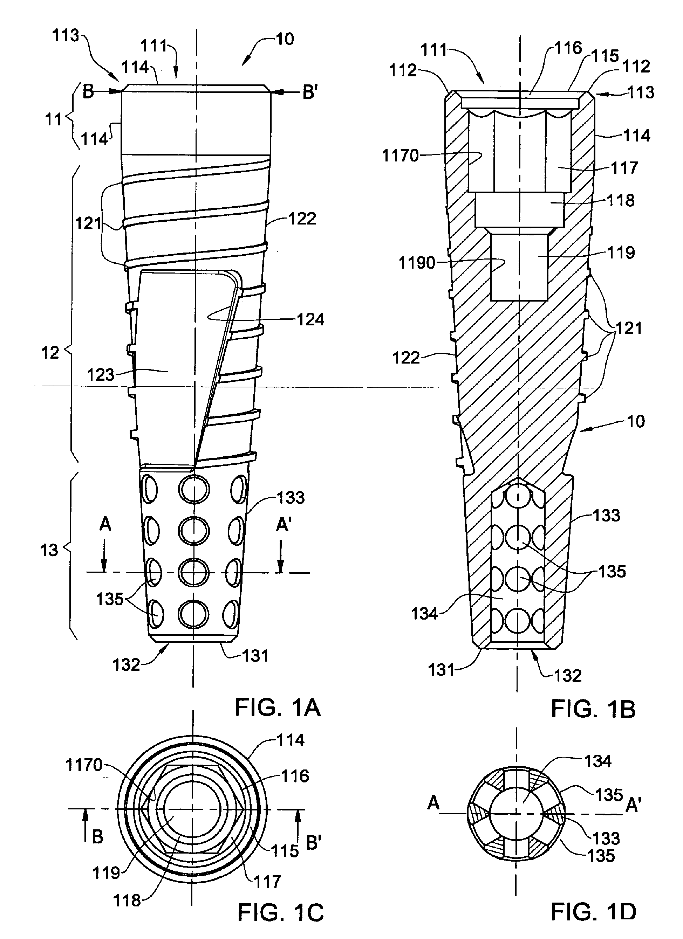

Referring to Figs. 1A and 1B a schematic side elevational view and a longitudinal cross-sectional view of an endosseous dental implant 10 is illustrated, correspondingly, according to one embodiment of the present invention. It should be understood that the dental implant 10 is not bound to the scale and proportion illustrated in Figs. 1A and 1B, and in other drawings. Generally, the dental implant 10 includes a collar portion 11, a mid portion 12 integrally connected to the collar portion 11, and a base portion 13 integrally connected to a mid portion 12. Thus, the base portion 13 together with the collar portion 11 and the mid portion 12 form a one-piece fixture of the dental implant 10.

The dental implant 10 is fabricated of any suitable biocompatible material. For example, the implant 10 may be formed from a titanium alloy and may have any one of various surface coatings or surface textures, such as an as-machined surface or microtextured surface to promote osteointegration. The portions of the implant that are to be in intimate contact with the bone can, for example, be titanium plasma sprayed. When desired, these portion can be coated with hydroxyl-apatite, tricalcium phosphate or any other suitable material that increases the surface area of the implant's body. Texturing of the threaded surface can be accomplished by a variety of processes known to those skilled in the art, such as grit-blasting with an abrasive medium, or etching with a strong acid.

Referring to **Figs. 1A, 1B and 1C** together, the collar portion **11** has generally a cylindrical unthreaded shape and includes an axial opening **111** arranged at a proximal end **112** of the dental implant **10.** It should be noted that in the present description and claims that follow, the terms "proximal" and "distal" are used with reference to the dental surgeon of the dental implant. The collar portion is configured to support an abutment (not shown), which lies on the proximal end **112** of the dental implant **10.**

When desired, as shown in **Figs. 1A, 1B and 1C,** the collar portion **11** can include a relatively small mouth region **113** in which an outer surface **114** of the collar portion **11** tapers inwardly with contraction towards the uppermost edge of the proximal end **112,** whereas an inner surface **115** of the of collar portion **11** tapers outwardly with expansion towards the uppermost edge of the proximal end **112,** thereby forming a chamfered zone **116** in the vicinity of the axial opening **111.** These features are created for decreasing the sharpness of the uppermost edge of the implant at the end, and thereby enhancing its atraumatic characteristics.

According to the embodiment shown in **Figs. 1A and 1B,** the axial opening 111 extends into a blind hole having four distinct zones proceeding from the proximal end **112** into the interior of the implant **10.** The internally-extending chamfered zone **116** (corresponding to the mouth region **113**) is followed by a wrench-engaging zone **117.** The wrench-engaging zone **117** has a multi-sided, wrench-engaging surface **1170** that is adapted for engaging with a tool (dental hand-piece) that screws the implant into the bone. The wrench-engaging zone **117** is followed by a post receiving chamber zone **118,** which, in turn, is followed by a more deeply recessed internally-threaded zone **119** having a threaded surface **1190.** The post receiving chamber zone **118** is configured to fit a post of the abutment (not shown), and in some arrangements can include antirotational features (not shown), for example, flat sides, grooves, and or indentations, so as to prevent the abutment from rotating with respect to the dental implant **10.** The internally-threaded zone **119** is configured to receive a bolt (not shown) used to secure the abutment to the dental implant **10.**

The most deeply arranged zones can be extended from the internal part of the collar portion into the internal part of the mid portion **12.** As shown in **Figs. 1A and 1B,** a part of the wrench-engaging zone **117,** and the entire post receiving chamber zone **118** and the internally-threaded zone **119** are resided within the mid portion **12.**

The mid portion **12** has external threads **121** helically turning in a clockwise direction around an external wall **122** of the mid portion **12.** The threads **121** can have any desired configuration known to a person versed in the art. According to the embodiment shown in **Figs. 1A and 1B,** the mid portion **12** also has a helically shaped flute **123** having a self-tapping cutting edge **124.** When desired, more than one flute can be disposed on the mid portion **12.** For example, an implant having a larger diameter than those shown in the figures, may utilize two or more separate flute sections. The overall length of the flute **123** may vary. As shown in **Figs. 1A and 1B,** the flute **123** extends about half of the length of the mid portion **12,** and does not extend through the entire length of the mid portion **12.** However, when desired, the flute **123** may extend from the base portion **13** of the implant towards the collar portion **11** completely through the mid portion **12.** According to the embodiment shown in **Figs. 1A and 1B,** the mid portion **12** is tapered with contraction towards the base portion **13.** The contraction is axially symmetric with a tapering angle from about 2° to about 10° with respect to an axis O of the dental implant. The contraction can start from the end of the collar portion **11,** however other embodiments are contemplated. It should be understood that the contraction towards the distal end can be either symmetric or asymmetric with respect to the longitudinal axis **O** of the dental implant.

The base portion **13** is hollow inside and located at an open distal end **131** of the implant **10.** An opening **132** formed at the distal end **131** extends through the base portion **13** thereby creating a blind hole. The hollow base portion **13** has a wall **133** defining an internal storage volume **134** for an osseous tissue of the jawbone (not shown). The base portion **13** is unthreaded outside and tapered continuously from the mid portion **12** with contraction towards the distal end **131.** It should be noted that the dental implant **10** includes the threads only on the mid portion whereas the collar portion **11** and the base portion **13** have unthreaded external surface. In practice, implants having such a feature can cause fewer traumas to the jawbone than implants having completely treated surface. Accordingly, that can result in decreased healing time after implantation of the implant **10.**

Referring to **Figs. 1A, 1B and 1D** together, the hollow base portion **13** has a plurality of openings **135** arranged in the wall **133.** Each opening **135** passes through the wall **133** and enters the storage volume **134.** The openings **135** have a circular shape of a predetermined diameter and generally are arranged around the hollow base portion **13** in one or more rows. The rows of the openings **135** are distributed along the length of the hollow base portion **13** and equally spaced, although other arrangements of the rows are contemplated. In each row, the circular openings **135** are equally and symmetrically spaced with respect to the axis **O,** although other arrangements of the openings in rows are contemplated.

The main purpose of the openings **135** is to enable the osseous tissue of the jawbone to penetrate and grow into the internal storage volume **134** after implantation during the healing time period, thereby securing the dental implant in position in the jawbone. The surface area for bone growth is increased, since bone tissue can grow not only around the implant, but also within the internal storage volume **134.** The increased surface area promotes osseointegration.

It should be noted here that contrary to the present invention, in the prior art dental implants which may also include openings in the implant's wall (for example, in the dental implants described in U.S. Pat. Nos. 5,366,374 and 5,871,356), the openings in the wall as well as the internal chamber in the implant are formed for collecting bone shavings, and fragments formed during the rotation of self-tapping cutting edges and sharp ridges adapted to trephine the bone. On the other hand, since the dental implant **10** does not include threads on the base portion **13,** it will not trephine and in any other way damage the bone at the distal end of the implant; thereby the implant **10** causes fewer traumas to the jawbone. Accordingly, the healing time required after implantation of the implant can be decreased.

It should be understood that the larger openings in the wall **133** can provide greater penetration and growth of bone tissues within the internal storage volume **134.** However, the size of the openings is bound by the strength of the implant **10.** In other words, the implant should be mechanically strong in order to resist the stresses to which it is subjected during installation and use. The strength of the implant should be greater than the level of strain induced in the implant by an external force, e.g., by occlusal load. It is known that occlusal forces in young males can range from 222 N in the incisor region to 522 N in the molar region.

In its simplest form, stress imparted on an implant is equal to the magnitude of a force distributed over an area over which the force acts (Stress=Force/Area). Stress can be represented as either normal stress (perpendicular to the plane on which the force acts) or shear stress (parallel to the plane on which the force acts).

Hooke's law relates normal stress and normal strain according to the following formula:

$$\sigma = E\varepsilon, \qquad (1)$$

where: $\sigma$ is the normal stress, $E$ is the modulus of elasticity and $\varepsilon$ is the normal strain.

A similar relationship exists between shear stress and shear strain according to the following formula:

$$\tau = G\gamma, \qquad (2)$$

where: $\tau$ is the shear stress, G is the modulus of rigidity and $\gamma$ is the shear strain.

Referring to **Figs. 1A, 1B and 1D** together, the weakest section of the implant is along the line A - A'.

A stress imparted on implant **10** in this section, can be estimated according to the following formula:

$$\sigma_{A-A'} = F/A_{A-A'} = F/\{[\pi (D_1^2 - D_2^2)/4] - [n\, d(D_1 - D_2)/2]\}; (3)$$

where: $A_{A-A'}$ is the area of the implant's surface at the level of the line A - A'; $D_1$ is the outer diameter of the base portion **13** at the level of the line A - A'; $D_2$ is the diameter of the internal storage volume **134** at the level of the line A - A'; $n$ is the number of openings at the level of the line A - A'; and $d$ is the diameter of the openings.

The following values of the parameters of the implant **10** were selected for estimations: $D_1 = 0.26$cm; $D_2 = 0.15$cm; $d = 0.07$cm; $n = 6$ and $\pi \cong 3.14$. Substitution of these values into formula (3) provides the values of $\sigma_{A-A'} \cong 180$ MPa for the load $F = 222$ N (occlusal forces in the jaw incisor region) and $\sigma_{A-A'} \cong 420$ MPa for the load $F = 522$ N (occlusal forces in the jaw molar region).

These values of $\sigma_{A-A'}$ can be compared to the values of a yield strength of the materials used for the fabrication of implants. For example, the yield strength for Titanium ASTM Grade 4 and Titanium Alloy: Ti 6A1 4V-EL1 is 480 MPa and 760 MPa, correspondingly. These values are less than the estimated values for $\sigma_{A-A'}$. Accordingly, the dental implant **10** having the above characteristics selected for the estimation can be fabricated from these materials.

It was estimated that for conventional materials used for fabrication of dental implants, in order to withstand the external load, the area of the openings in the wall **133** of the base portion **13** should not exceed 60% of the total area of the wall **133.** Preferably, the area of the openings in the wall of the base portion is in the range of about 50% to 60% of the total area of the wall.

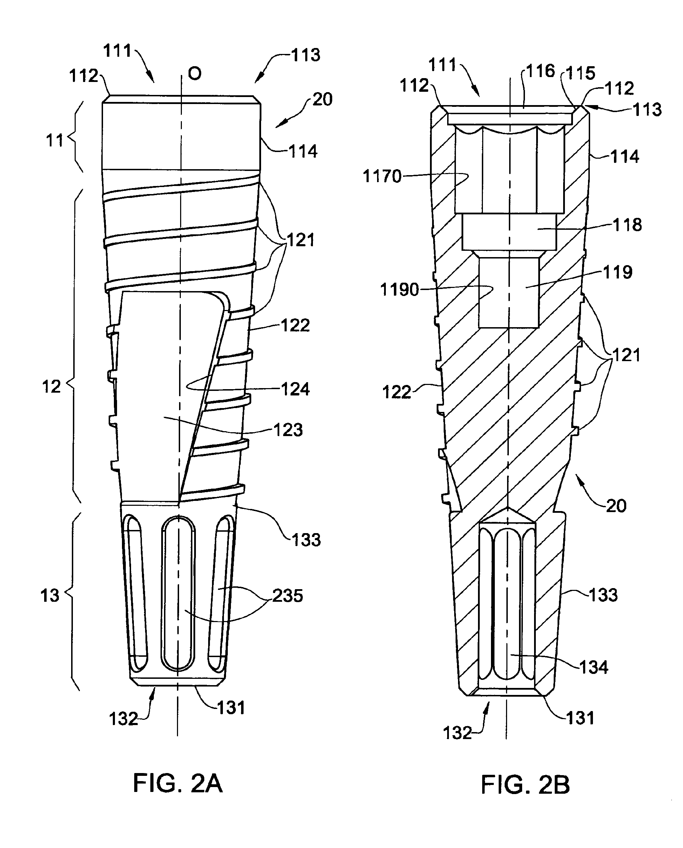

It should be understood that the shape of the openings in the wall of the base portion **13** is not bound to a circular shape. Referring to **Figs. 2A and 2B**, a schematic side elevation and longitudinal cross-sectional views of an endosseous dental implant **20** are illustrated, correspondingly, according to another embodiment of the present invention. This embodiment differs from the implant (**10** in **Figs. 1A- 1D**) in the fact that the hollow base portion **13** includes a plurality of openings **235** which are in the form of slots arranged in the wall **133.** The slot openings **235** extend along the length of the hollow base portion **13,** and are symmetrically spaced with respect to the axis **O**, although other arrangements of the slots are contemplated. Each slot opening **235** passes through the wall **133** and enters the storage volume **134.**

The overall length of the slot openings **235** may vary. As shown in **Figs. 2A and 2B,** the slot openings **235** extend substantially along the entire length of the base portion **13** between the mid portion **12** and the distal end of the base portion **13.** However, when desired, the slot openings **235** may extend only a part of the length of the base portion **13,** and do not extend along the entire length of the base portion **13.**

As such, those skilled in the art to which the present invention pertains, can appreciate that while the present invention has been described in terms of preferred embodiments, the concept upon which this disclosure is based may readily be utilized as a basis for the designing of other structures and processes for carrying out the several purposes of the present invention.

Although the collar portion **11** of the implant shown in **Figs. 1A, 1B, 2A and 2B** has a cylindrical shape, when desired the collar portion **11** can be inwardly or outwardly tapered with contraction or expansion towards the proximal end **112.**

Although a preferable configuration of the axial opening **111** arranged at a proximal end **112** of the dental implant **10** is shown in **Figs. 1A, 1B, 2A and 2B**, the dental implant can also have another configuration of the axial opening that is different than the configuration shown in these drawings. It should be understood that this configuration depends on the tool (dental hand-piece) utilized for axial rotation of the implant during implantation.

It should be noted that the application describes threads and flutes that spiral in a clockwise direction about the implant. However, when desired, these threads and flutes may also be configured to spiral in a counter clockwise direction about the implant.

Although the openings arranged in the wall of the hollow base portion **13** are shown in the circular shape in **Figs. 1A and 1B** and the form of slots in **Figs. 2A and 2B,** generally the opening can have any desired shape and be distributed along the wall's surface in any fashion. Examples of the shape suitable for the openings include, but are not limited to, oval, polygonal, semi-circular, D-shape, and various combinations thereof. Preferably, the area of the openings in the wall of the base portion is in the range of about 50% to 60% of the total area of the wall.

It should be understood that the dental implant of the present invention is not limited to medical treatment of a human body. It can be successfully employed for medical treatment of animals as well.

## Claims

1. A dental implant (10, 20) for anchoring in a jawbone to support an abutment for mounting a dental prosthesis, comprising:

   a collar portion (11) located at an open proximal end (112) having an axial opening (111) that extends into a blind hole proceeding from the proximal end (112) into the interior of the implant (10, 20) and configured to secure the abutment to the dental implant (10, 20);
   a mid portion (12) integrally connected to the collar portion (11) and including external helical threads turning around an external wall (122) of the mid portion (12), and
   a base hollow portion (13) integrally connected to a mid portion (12) and located at an open distal end (131) of said implant and comprising a wall (133) defining an internal storage volume (134) for an osseous tissue of said jawbone, said base hollow portion (13) comprising a plurality of openings (135, 235) arranged in the wall (133) and entering said internal storage volume (134);
   **characterized in that**
   said mid portion (12) being tapered over the mid portion entire length with contraction towards the base hollow portion (13), and said base hollow portion (13) being unthreaded and tapered over the base hollow portion entire length with contraction towards the distal end (131).

2. The dental implant of claim 1, wherein said collar portion (11) has a substantially cylindrical unthreaded shape.

3. The dental implant of claim 1, wherein said blind hole proceeding from the proximal end (112) into the interior of the implant (10, 20) includes an internally-extending chamfered zone (116) located near the proximal end (112), and is followed by a wrench-engaging zone (117) adapted for engaging with a tool that screws the implant into the jawbone; said wrench-engaging zone (117) is followed by an abutment post receiving chamber zone (118), that in turn is followed by an internally-threaded zone (119) having a threaded surface (1190) configured to receive a bolt used to secure the abutment to the dental implant (10, 20).

4. The dental implant of claim 3, wherein a part of the wrench-engaging zone (117), the entire post receiving chamber zone (118) and the internally-threaded zone (119) are resided within the mid portion (12).

5. The dental implant of claim 1, wherein said mid portion (12) includes at least one flute (123) having a self-tapping cutting edge (124).

6. The dental implant of claim 5, wherein the flute (123) extends at least half of the length of the mid portion (12).

7. The dental implant of claim 1, wherein the contraction of said mid portion (12) is axially symmetric with a tapering angle from about 2° to about 10°.

8. The dental implant of claim 1, wherein the contraction of said mid portion (12) starts from the end of the collar portion (11).

9. The dental implant of claim 1, wherein the contraction of said mid portion (12) is asymmetric with respect to a longitudinal axis of the dental implant.

10. The dental implant of claim 1, wherein the plurality of the openings (135) have a circular shape.

11. The dental implant of claim 11, wherein the plurality of the openings (135) are arranged in at least one row.

12. The dental implant of claim 1, wherein the area of the openings in the wall (133) of the base portion (13) is in the range of about 50% to 60% of the total area of the wall.

13. The dental implant of claim 1, wherein the plurality of the openings (235) are slot openings.

14. The dental implant of claim 14, wherein the plurality of the slot openings (235) extend along at least a part of the length of the base portion (13) between the mid portion (12) and the distal end of the base portion (13).


**Patentansprüche**

1. Zahnimplantat (10, 20) zur Verankerung in einem Kieferknochen zum Stützen eines Abutments zur Befestigung einer Zahnprothese, welches Folgendes umfasst:

   einen Halsabschnitt (11), der sich an einem offenen proximalen Ende (112) befindet, mit einer axialen Öffnung (111), welche sich in ein Blindloch erstreckt, das von dem proximalen Ende (112) in das Innere des Implantates (10, 20) verläuft und zum Sichern des Abutments an dem Zahnimplantat (10, 20) konfiguriert ist;
   einen mittleren Abschnitt (12), der integral mit dem Halsabschnitt (11) verbunden ist und ein externes spiralförmiges Gewinde beinhaltet, das um eine Außenwand (122) des mittleren Abschnitts (12) verläuft; und
   einen hohlen Basisabschnitt (13), der integral mit einem mittleren Abschnitt (12) verbunden ist und sich in einem offenen distalen Ende (131) des Implantats befindet und eine Wand (133) umfasst, welche ein internes Speichervolumen (134) für ein Knochengewebe des Kieferknochens definiert, wobei der hohle Basisabschnitt (13) mehrere Öffnungen (135, 235) umfasst, die in der Wand (133) angeordnet sind und in das interne Speichervolumen (134) eintreten;
   **dadurch gekennzeichnet, dass**
   der mittlere Abschnitt (12) über die gesamte Länge des mittleren Abschnittes konisch ist, mit Verengung in Richtung des hohlen Basisabschnittes (13), und dass der hohle Basisabschnitt (13) nicht mit Gewinde versehen ist und über die gesamte Länge des hohlen Basisabschnittes konisch ist, mit Verengung in Richtung des distalen Endes (131).

2. Zahnimplantat nach Anspruch 1, wobei der Halsabschnitt (11) eine im Wesentlichen zylindrische gewindelose Form aufweist.

3. Zahnimplantat nach Anspruch 1, wobei das Blindloch, das von dem proximalen Ende (112) in das Innere des Implantates (10, 20) verläuft, eine sich im Inneren erstreckende abgeschrägte Zone (116) beinhaltet, die sich nahe dem proximalen Ende (112) befindet, und der eine Schlüsseleingriffszone (117) folgt, die für den Eingriff eines Werkzeuges, welches das Implantat in den Kieferknochen schraubt, geeignet ist; wobei der Schlüsseleingriffszone (117) eine Abutmentpfosten-Aufnahmekammer-Zone (118) folgt, der wiederum eine mit Innengewinde versehene Zone (119) folgt, die eine Gewindefläche (1190) aufweist, die zum Aufnehmen einer Schraube, die zum Sichern des Abutments an dem Zahnimplantat (10, 20) verwendet wird, konfiguriert ist.

4. Zahnimplantat nach Anspruch 3, wobei ein Teil der Schlüsseleingriffszone (117), die gesamte Pfosten-Aufnahmekammer-Zone (118) und die mit Innengewinde versehene Zone (119) innerhalb des mittleren Abschnittes (12) liegen.

5. Zahnimplantat nach Anspruch 1, wobei der mittlere Abschnitt (12) mindestens eine Rille (123) beinhaltet, die eine selbstschneidende Schneidkante (124) aufweist.

6. Zahnimplantat nach Anspruch 5, wobei sich die Rille (123) mindestens entlang der Hälfte der Länge des mittleren Abschnittes (12) erstreckt.

7. Zahnimplantat nach Anspruch 1, wobei die Verengung des mittleren Abschnittes (12) axial symmetrisch mit einem Verjüngungswinkel zwischen etwa 2 ° und etwa 10 ° ist.

8. Zahnimplantat nach Anspruch 1, wobei die Verengung des mittleren Abschnittes (12) vom Ende des Halsabschnittes (11) aus beginnt.

9. Zahnimplantat nach Anspruch 1, wobei die Verengung des mittleren Abschnittes (12) in Bezug auf eine Längsachse des Zahnimplantates asymmetrisch ist.

10. Zahnimplantat nach Anspruch 1, wobei die mehreren Öffnungen (135) eine kreisförmige Form aufweisen.

11. Zahnimplantat nach Anspruch 11, wobei die mehreren Öffnungen (135) in mindestens einer Reihe angeordnet sind.

12. Zahnimplantat nach Anspruch 1, wobei der Bereich der Öffnungen in der Wand (133) des Basisabschnittes (13) einen Bereich von etwa 50 % bis 60 % der Gesamtfläche der Wand ausmacht.

13. Zahnimplantat nach Anspruch 1, wobei die mehreren Öffnungen (235) Schlitzöffnungen sind.

14. Zahnimplantat nach Anspruch 14, wobei sich die mehreren Schlitzöffnungen (235) entlang mindestens eines Teils der Länge des Basisabschnittes (13) zwischen dem mittleren Abschnitt (12) und dem distalen End des Basisabschnittes (13) erstrecken.


**Revendications**

1. Implant dentaire (10, 20) destiné à être ancré dans un maxillaire pour supporter un aboutement permettant de monter une prothèse dentaire, comprenant :

   une partie col (11), placée à une extrémité proximale ouverte (112) dotée d'une ouverture axiale (111), qui s'étend d'un trou borgne allant de l'extrémité proximale (112) jusqu'à l'intérieur de l'implant (10, 20) et conçue pour fixer l'aboutement à l'implant dentaire (10, 20) ;
   une partie médiane (12) connectée en tant que partie intégrante à la partie col (11) et comprenant des filets hélicoïdaux externes tournant autour d'une paroi externe (122) de la partie médiane (12), et
   une partie creuse de base (13) connectée en tant que partie intégrante à une partie médiane (12) et située à une extrémité distale ouverte (131) dudit implant et comprenant une paroi (133) définissant un volume de stockage interne (134) pour un tissu osseux dudit maxillaire, ladite partie creuse de base (13) comprenant une pluralité d'ouvertures (135, 235) disposées dans la paroi (133) et rentrant dans ledit volume de stockage interne (134) ;
   **caractérisé en ce que**
   ladite partie médiane (12) est effilée sur toute la longueur de la partie médiane en se contractant vers la partie creuse de base (13), et que ladite partie creuse de base (13) n'est pas filetée et est effilée sur toute la longueur de la partie creuse de base en se contractant vers l'extrémité distale (131).

2. Implant dentaire selon la revendication 1, dans lequel ladite partie col (11) a une forme non filetée sensiblement cylindrique.

3. Implant dentaire selon la revendication 1, dans lequel ledit trou borgne allant de l'extrémité proximale (112) jusqu'à l'intérieur de l'implant (10, 20) comprend une zone chanfreinée s'étendant à l'intérieur (116) située près de l'extrémité proximale (112) et est suivi d'une zone d'engagement de clé (117) adaptée pour y engager un outil qui visse l'implant dans le maxillaire ; ladite zone d'engagement de clé (117) étant suivie d'une zone à chambre de réception de broche d'aboutement (118), qui est suivie à son tour par une zone filetée à l'intérieur (119) dotée d'une surface filetée (1190) conçue pour recevoir une broche utilisée pour fixer l'aboutement à l'implant dentaire (10, 20).

4. Implant dentaire selon la revendication 3, dans lequel une partie de la zone d'engagement de clé (117), la totalité de la zone à chambre de réception de broche (118) et la zone filetée à l'intérieur (119) sont situées dans la partie médiane (12).

5. Implant dentaire selon la revendication 1, dans lequel ladite partie médiane (12) comprend au moins une goujure (123) dotée d'une arête de coupe autofileteuse (124).

6. Implant dentaire selon la revendication 5, dans lequel la goujure (123) s'étend sur au moins la moitié de la longueur de la partie médiane (12).

7. Implant dentaire selon la revendication 1, dans lequel la contraction de ladite partie médiane (12) est axialement symétrique, avec un angle de conicité d'environ 2° à environ 10°.

8. Implant dentaire selon la revendication 1, dans lequel la contraction de ladite partie médiane (12) part de l'extrémité de la partie col (11).

9. Implant dentaire selon la revendication 1, dans lequel la contraction de ladite partie médiane (12) est asymétrique par rapport à un axe longitudinal de l'implant dentaire.

10. Implant dentaire selon la revendication 1, dans lequel la pluralité d'ouvertures (135) ont une forme circulaire.

11. Implant dentaire selon la revendication 11, dans lequel la pluralité d'ouvertures (135) sont disposées en au moins une rangée.

12. Implant dentaire selon la revendication 1, dans lequel la surface des ouvertures de la paroi (133) de la partie de base (13) représente environ 50 % à 60 % de la surface totale de la paroi.

13. Implant dentaire selon la revendication 1, dans lequel la pluralité d'ouvertures (235) sont des fentes d'ouverture.

14. Implant dentaire selon la revendication 14, dans lequel la pluralité de fentes d'ouverture (235) s'étendent le long d'au moins une partie de la longueur de la partie de base (13) entre la partie médiane (12) et l'extrémité distale de la partie de base (13).

FIG. 1A

FIG. 1B

FIG. 1C

FIG. 1D

FIG. 2A

FIG. 2B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2199626 A
- US 5897319 A, Wagner
- US 2008020349 A1
- US 5759034 A, Daftary
- US 5676545 A, Jones
- US 5366374 A, Vlassis
- US 5871356 A, Guedj